# EUROPÄISCHE PATENTSCHRIFT

(11) **EP 2 092 185 B1**
(45) Veröffentlichungstag und Bekanntmachung des Hinweises auf die Patenterteilung: **27.07.2011**
(21) Anmeldenummer: 07818685.5
(22) Anmeldetag: 04.10.2007
(51) Int. Cl.: F02M 25/07, F02D 21/08

(54) **BRENNKRAFTMASCHINE MIT ABGASRÜCKFÜHRUNG**
INTERNAL COMBUSTION ENGINE WITH EXHAUST-GAS RECIRCULATION
MOTEUR À COMBUSTION INTERNE DOTÉ D'UN RECYCLAGE DES GAZ D'ÉCHAPPEMENT

(30) Priorität: 16.11.2006 DE 102006054043
(43) Veröffentlichungstag der Anmeldung: 26.08.2009
(73) Patentinhaber: VOLKSWAGEN AG, 38436 Wolfsburg (DE)
(72) Erfinder: NITZKE, Hans-Georg, 38547 Wettmershagen (DE); LARINK, Jörg, 49733 Haren/Ems (DE); JESCHKE, Jens, 38106 Braunschweig (DE); LANG, Thomas, 38554 Weyhausen (DE); WENDT, Jürgen, 38446 Wolfsburg (DE); FREITAG, Achim, 38302 Wolfenbüttel (DE); MÜLLER, Jörn, 38173 Sickte (DE); GROENENDIJK, Axel, 38518 Gifhorn (DE); NEE, Lothar, 38446 Wolfsburg (DE); SCHER, Uwe, 38162 Cremlingen/Destedt (DE); ABERLE, Werner, 38542 Leiferde (DE); MANNIGEL, Dieter, 38116 Braunschweig (DE)
(86) Internationale Anmeldenummer: PCT/EP2007/008606
(87) Internationale Veröffentlichungsnummer: WO 2008/058596

(56) Entgegenhaltungen:
- EP-A- 1 114 924
- EP-A- 1 270 921
- EP-A- 1 420 159
- WO-A-2004/007925
- JP-A- 9 133 052
- JP-A- 2004 150 319
- JP-A- 2004 156 572
- JP-A- 2006 336 547
- US-A1- 2006 117 750
- US-B1- 6 850 833
- US-B2- 7 013 879

## Beschreibung

Die Erfindung betrifft eine Brennkraftmaschine, insbesondere Dieselmotor oder Ottomotor, mit einer Frischluftanlage, in dem ein Ladeluftkühler (LLK) angeordnet ist, einer Abgasanlage, einem Abgasturbolader (ATL), welcher einen in der Frischluftanlage stromauf des LLK angeordneten Verdichter und eine in der Abgasanlage angeordnete Turbine aufweist, einer ersten Leitung für eine Hochdruck-Abgasrückführung (HD-AGR), welche stromauf der Turbine des ATL von der Abgasanlage abzweigt, ein HD-AGR-Ventil aufweist und stromab des LLK in die Frischluftanlage mündet, einer zweiten Leitung für eine Niederdruck-Abgasrückführung (ND-AGR), welche stromab der Turbine des ATL von der Abgasanlage abzweigt, ein ND-AGR-Ventil aufweist und stromauf des Verdichters des ATL in die Frischluftanlage mündet, und einer Abgasklappe, welche in der Abgasanlage stromab der Abzweigung der ND-AGR-Leitung angeordnet ist, gemäß dem Oberbegriff des Patentanspruchs 1. Die Erfindung betrifft ferner ein Verfahren zum Betreiben einer Brennkraftmaschine.

Aus der JP 2004150319 A ist eine Dieselbrennkraftmaschine mit einem HD-AGR-Pfad und einem ND-AGR-Pfad bekannt, wobei an der Abzweigung des ND-AGR-Pfades von einem Abgasrohr der Dieselbrennkraftmaschine eine Abgasklappe angeordnet ist. Der ND-AGR-Massenstrom wird stromab einer Turbine eines Abgasturboladers (ATL) auf der Niederdruckseite nach einer Einrichtung zur Abgasnachbehandlung entnommen und vor einem Verdichter des ATL in die Ansaugluft eingespeist. Auf dem Weg zum Verdichtereintritt wird der ND-AGR-Massenstrom abgekühlt. Vor dem Eintritt des ND-AGR-Massenstromes in die Frischluft ist ein ND-AGR-Ventil vorgesehen. Bei niedrigen und mittleren Drehzahlen und im mittleren Lastbereich, d.h. bei ausreichendem Druckgefälle, wird die ND-AGR-Strecke 12 verwendet.

Aus der JP 2004168572 A ist ein. Dieselmotor bekannt, der eine HD-AGR-Strecke mit einem HD-AGR-Ventil und eine ND-AGR-Strecke aufweist. Die ND-AGR-Strecke zweigt stromab einer Turbine eines Abgasturboladers (ATL) sowie nach einer Abgasnachbehandlungsvorrichtung ab und mündet stromauf eines Verdichters des ATL in die Frischluftstrecke. Eine Abgasklappe regelt die Menge des ND-AGR-Massenstromes gemäß einem Betriebszustand des Dieselmotors.

Aus US 7013879 B2 ist eine ND-AGR-Strecke für eine Brennkraftmaschine bekannt, die stromab der Turbine eines ATL sowie eines Partikelfilters abzweigt und über einen AGR-Kühler sowie ein Steuerventil unmittelbar stromauf des Verdichters des ATL in die Frischluftleitung mündet.

Die Merkmale des Oberbegrifffes gemäß Patentanspruch 1 sind aus der EP-A-1420159 bekannt.

Der Erfindung liegt die Aufgabe zugrunde, eine Brennkraftmaschine sowie ein Verfahren zum Betrieb derselben hinsichtlich der Abgasaufbereitung und der Abgasnachbehandlung zu verbessern.

Diese Aufgabe wird erfindungsgemäß durch eine Brennkraftmaschine der o.g. Art mit den in Anspruch 1 gekennzeichneten Merkmalen und durch ein Verfahren der o.g. Art mit den in Anspruch 8 angegebenen Merkmalen gelöst. Vorteilhafte Ausgestaltungen der Erfindung sind in den weiteren Ansprüchen beschrieben.

Dazu ist es bei einer Brennkraftmaschine der o.g. Art erfindungsgemäß vorgesehen, dass in der ND-AGR-Leitung wenigstens ein Drucksensor derart angeordnet und ausgebildet ist, dass dieser in der ND-AGR-Leitung eine Druckdifferenz zwischen einem Ort stromauf und einem Ort stromab des ND-AGR-Ventils bestimmt und dass in der ND-AGR-Leitung (70) ein AGR-Kühler (74) angeordnet ist und dass der Drucksensor einen Absolutdrucksensor umfasst, welcher in Strömungsrichtung vor dem AGR-Kühler (74) angeordnet ist.

Dies hat den Vorteil, dass ein realer ND-AGR-Massenstrom bestimmt werden kann, der als Basiswert zum steuern der Abgasklappe und des ND-AGR-Ventil verwendet werden kann.

Beispielsweise umfasst der Drucksensor einen Differenzdrucksensor.

Zweckmäßigerweise ist in der HD-AGR-Leitung ein AGR-Kühler und in der Abgasanlage stromab der Turbine des ATL ein Partikelfilter angeordnet, wobei die ND-AGR-Leitung stromab des Partikelfilters von der Abgasanlage abzweigt.

Um den Verdichter vor zu hoher thermischer Belastung zu schützen und um das Gemisch aus Abgas und Frischluft genügend hoch verdichten zu können ist in der ND-AGR-Leitung ein AGR-Kühler angeordnet. Dieser ist bevorzugt stromauf des AGR-Ventils angeordnet.

Zur Überwachung etwaiger OBD-Anforderungen ist in der ND-AGR-Leitung stromab des ND-AGR-Ventils ein Temperatursensor angeordnet.

Zweckmäßigerweise ist in der Abgasanlage stromauf der Turbine ein Temperatursensor angeordnet.

Weiterhin ist es bei einem Verfahren der o.g. Art erfindungsgemäß vorgesehen, dass die Abgasklappe geöffnet und der Volumenstrom über die ND-AGR-Leitung solange ausschließlich mittels des ND-AGR-Ventils geregelt wird, solange ein Druckgefälle über das ND-AGR-Ventil einen vorbestimmten Wert überschreitet, wobei bei Unterschreiten des vorbestimmten Wertes zusätzlich die Abgasklappe in Schließrichtung betätigt wird, um den Volumenstrom über die ND-AGR-Leitung zu regeln.

Dies hat den Vorteil, dass eine sehr gute Durchmischung des rückgeführten Abgases mit der Frischluft erzielt wird, wobei das rückgeführte Abgas nahezu pulsationsfrei ist und eine zusätzliche Verminderung von Schadstoffen im Abgas erzielt wird.

Ein besonders sauberes rückgeführtes Abgas erzielt man dadurch, dass das rückgeführte Abgas aus der Abgasanlage stromab eines Partikelfilters abgezweigt wird. Zweckmäßigerweise wird der HD-AGR-Massenstrom stromab eines Ladeluftkühlers der Frischluftanlage zugeführt. Weiterhin ist es vorteilhaft, den HD-AGR-Massenstrom vor dem Einleiten in die Frischluftanlage zu kühlen.

Zum genauen Regeln des ND-AGR-Massenstromes wird eine Druckdifferenz über das ND-AGR-Ventil gemessen und in Abhängigkeit von dieser Druckdifferenz das ND-AGR-Ventil und/oder die Abgasklappe betätigt.

Zur Überwachung etwaiger OBD-Anforderungen wird stromab des ND-AGR-Ventil eine Temperatur des ND-AGR-Massenstromes gemessen.

Zweckmäßigerweise wird aus einem über das ND-AGR-Ventil bestimmten Differenzdruck der ND-Abgasmassenstrom berechnet und daraus ein Volumenstrom über einen in der Abgasanlage angeordneten Partikelfilter bestimmt wird. Weiterhin wird dann aus dem Volumenstrom über den Partikelfilter eine Beladung des Partikelfilters bestimmt.

Um den Verdichter vor zu hoher thermischer Belastung zu schützen und um das Gemisch aus Abgas und Frischluft genügend hoch verdichten zu können, wird der ND-AGR-Massenstrom vor dem Einleiten in die Frischluftanlage gekühlt.

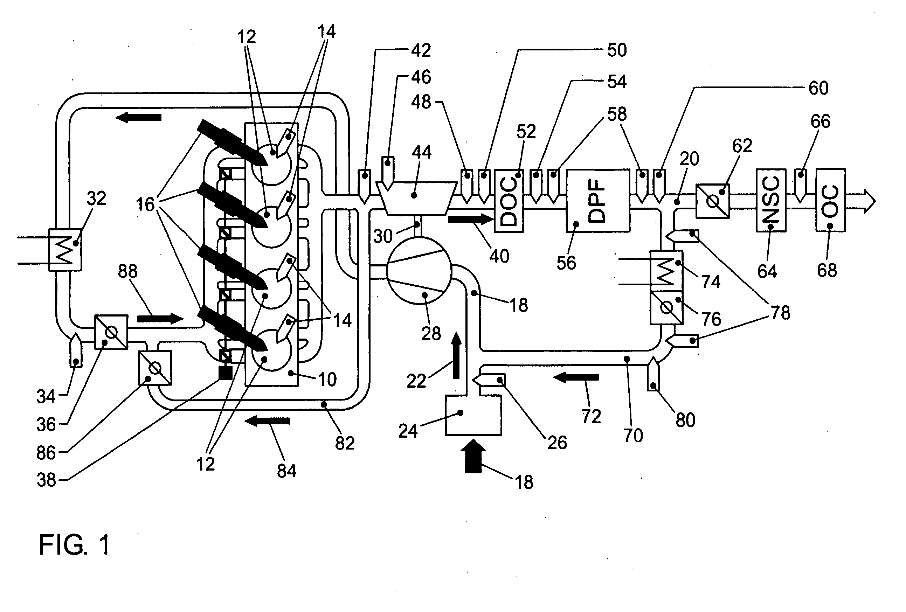

Die Erfindung wird im Folgenden anhand der Zeichnung näher erläutert. Diese zeigt in der einzigen Fig. eine bevorzugte Ausführungsform einer erfindungsgemäßen Brennkraftmaschine.

Die in der einzigen Fig. dargestellte, bevorzugte Ausführungsform einer erfindungsgemäßen Brennkraftmaschine in Form einer Dieselbrennkraftmaschine umfasst einen Motorblock 10 mit Arbeitszylindern 12, wobei jedem Arbeitszylinder 12 je ein Zylinderdrucksensor 14 und ein Common-Rail-Injektor 16 zugeordnet ist. Eine Frischluftanlage 18 führt den Arbeitszylinder 12 Frischluft als Verbrennungsluft zu und eine Abgasanlage 20 führt Abgas aus den Arbeitszylindern 12 ab.

In der Frischluftanlage 18 ist in Strömungsrichtung der Frischluft 22 gesehen folgendes angeordnet, ein Luftfilter 24, ein Luftmassenmesser HFM 26, ein Verdichter 28 eine Abgasturboladers (ATL) 30, ein Ladeluftkühler (LLK) 32, ein Duosensor 34, welcher sowohl eine Temperatur T₂ als auch eine Druck p₂ misst, eine Regelklappe 36 und ein Schaltsaugrohr 38.

In der Abgasanlage 20 ist ausgehend vom Motorblock 10 in Strömungsrichtung des Abgases 40 folgendes angeordnet, ein erster Temperatursensor 42, welcher eine Temperatur T₃ misst, eine Turbine 44 des ATL 30, ein an der Turbine 44 angeordneter Wegsensor 46, eine erste Lambdasonde 48, ein zweiter Temperatursensor 50, welcher eine Temperatur T₄ misst, ein Oxidationskatalysator (DOC) 52, ein dritter Temperatursensor 54, welcher eine Temperatur T* misst, ein Dieselpartikelfilter (DPF) 56, ein erster Differenzdrucksensor 58, welcher einen Druckabfall über den Dieselpartikelfilter (DPF) 56 bestimmt, einen vierter Temperatursensor 60, welcher eine Temperatur T₄' bestimmt, eine Abgasklappe 62, einen NOₓ-Speicherkatalysator 64, eine zweite Lambdasonde 66 und eine H₂S-Sperrkatalysator 68.

Stromab des DPF 56, d.h. auf einer Niederdruckseite der Abgasanlage 20, zweigt von der Abgasanlage 20 eine Niederdruck-Abgasrückführungs-Leitung (ND-AGR-Leitung) 70 ab, die stromauf des Verdichters 28 und stromab des Luftfilters 24 bzw. des HFM 26 wieder in die Frischluftanlage 18 mündet. In der ND-AGR-Leitung 70 ist ausgehend von der Abzweigung von der Abgasanlage 20 in Strömungsrichtung eines ND-AGR-Massenstromes 72 gesehen folgendes angeordnet, ein AGR-Kühler 74, ein ND-AGR-Ventil 76, ein zweiter Differenzdrucksensor 78, welcher eine Druckabfall über den AGR-Kühler 74 und das ND-AGR-Ventil 76 bestimmt, und fünfter Temperatursensor 80, welcher eine Temperatur T_{ND-AGR} des ND-AGR-Massenstromes 72 bestimmt.

Optional kann die Kühlung des ND-AGR-Massenstromes unter Entfall des AGR-Kühlers 74 über die verwendeten Rohrlängen oder -gestaltungen erfolgen.

Stromauf der Turbine 44 des ATL 30, d.h. auf einer Hochdruckseite der Abgasanlage 20, zweigt von der Abgasanlage 20 eine Hochdruck-Abgasrückführungs-Leitung (HD-AGR-Leitung) 83 ab, die stromab der Regelklappe 36 und stromauf des Schaltsaugrohres in die Frischluftanlage 18 mündet. Mittels dieser HD-AGR-Leitung 83 wird ein HD-AGR-Massenstrom 84 über ein HD-AGR-Ventil 86 in die Frischluftanlage 18 geleitet. In der dargestellten Ausführungsform ist in der HD-AGR-Leitung 83 kein AGR-Kühler eingezeichnet. Optional kann jedoch eine Kühlung des HD-AGR-Massenstromes 84 entweder über die Rohrlänge der HD-AGR-Leitung 83 oder über einen zusätzlichen, in der HD-AGR-Leitung 83 angeordneten AGR-Kühler erfolgen, der ggf. mit dem AGR-Kühler 74 der ND-AGR-Strecke baulich und/oder funktionell vereinigt sein kann.

Die dargestellte Brennkraftmaschine weist somit eine Abgasrückführung (AGR) auf, bei der Abgas stromauf der Turbine 44 sowie stromab des DPF 56 aus der Abgasanlage 20 entnommen und nach Abkühlung stromauf des Verdichters 28 sowie stromab des LLK 32 der Frischluftanlage 18 zugeführt wird. Die Regelung des AGR-Menge, d.h. des rückgeführten Abgasmassenstromes erfolgt mittels der Abgasklappe 62 und den AGR-Ventilen 76 und 86. Die Brennkraftmaschine kann dabei wahlweise ohne AGR, mit HD-AGR oder ND-AGR oder gleichzeitig mit HD-AGR und ND-AGR betrieben werden. Dies erzielt insgesamt einen sauberen AGR-Massenstrom 72 und 84, eine bessere Abkühlung des AGR-Massenstromes 72 bzw. 84, keine Versottung des AGR-Kühlers, eine gute Durchmischung von AGR-Massenstrom 72 bzw. 84 mit Frischluft 88 in der Frischluftanlage. Es sind hohe AGR-Raten möglich und es ist ein teilhomogener Betrieb der Brennkraftmaschine möglich.

Mit Hilfe der Abgasklappe 62 und des ND-AGR-Ventils 76 vor dem Verdichter 28 wird der rückgeführte ND-AGR-Massenstrom 72 zwischen Luftmassenmesser 26 und Verdichter 28 der Frischluft 88 zugeführt. Hierbei wird zunächst nur über das ND-EGR-Ventil 76 gearbeitet, solange ein ausreichendes Druckgefälle zur Förderung des ND-AGR-Massenstromes 72 vorhanden ist. Ist dies nicht mehr der Fall, wird zusätzlich die Abgasklappe 62 etwas angestellt, um das Druckgefälle über das ND-EGR-Ventil 76 zu erhöhen. Dabei ist eine sehr gute Durchmischung des ND-AGR-Massenstromes 72 mit der Frischluft 88 gewährleistet. Ein weiterer Vorteil besteht u.a. darin, dass das rückgeführte Abgas 72 sauber und nahezu pulsationsfrei ist. Zusätzlich steht eine erhöhte Verdichterleistung zur Verfügung, da beim ND-AGR-Betrieb das gesamte Abgas 40 und nicht wie bisher nur ein Teilstrom der nicht rückgeführt wird, durch die Turbine geleitet wird. Da das rückgeführte Abgas 72 nach dem Verdichter 28 durch den leistungsfähigen Ladeluftkühler 32 (LLK) geleitet wird, ist die Abgas-/Luftmischung auch relativ kalt. Der Motor kann je nach Bedarf sowohl mit der HD-AGR-Strecke 82 als auch mit der ND-AGR-Strecke 70 betrieben werden. Für den Betrieb des Motors benötigt man einige Sensoren und Aktuatoren, deren Funktionen im nachfolgenden erläutert werden.

Das AGR-System der erfindungsgemäßen Brennkraftmaschine umfasst u.a. folgende Komponenten:
1. Abgasklappe 62 (elektrisch, Lageregelung im Motorsteuergerät)
   Im ND-AGR-Pfad 70:
2. AGR-Ventil 76 (elektrisch mit Lagerückmeldung, Lageregelung durch das Motorsteuergerät)
3. AGR-Kühler 74
4. Differenzdrucksensorik 78, alternativ Absolutdruck vor EGR-Kühler 74 (in Strömungsrichtung)
5. AGR-Temperatursensor 80 T_{ND-AGR}, optional zur Realisierung der OBD-Anforderungen (On Board Diagnose) in NAR (Nord Amerika)

Der AGR-Kühler stellt sicher, dass am Verdichter 28 im AGR-Betrieb keine unzulässig hohen Temperaturen auftreten. Der Differenzdrucksensor 78 dient zum Erfassen des Abgasvolumenstromes durch die ND-AGR-Strecke 70. Dieser Volumenstrom wird für eine Volumenstromberechnung über den DPF 56 und damit zur Beladungserfassung verwendet. Weiterhin dient dieser Volumenstrom als Ist-Größe der Abgasrate für die Abgasratenreglung. Der Temperatursensor 80 hat zwei Aufgaben: Er dient zu Diagnosezwecken (Wirkungsgradüberwachung des Kühlers), sowie zur Abschaltung der AGR bei drohender Übertemperatur des Verdichters 28. Der AGR-Kühler 74 kann kleiner dimensioniert werden als ohne diesen Temperatursensor 80.

Die Abgasklappe 62 und das ND-EGR-Ventil 76 sind die Stellglieder der AGR-Regelung. Sowohl das ND-EGR-Ventil wie die Abgasklappe können kontinuierlich verstellt werden. Dabei wird grundsätzlich zwischen zwei unterschiedlichen Betriebsmodi unterschieden:

### 1. Normalbetrieb (Fahrbetrieb mit Abgasrückführung):

Die Frischluftmasse 88 wird in üblicher Weise geregelt. Dabei wird der Istwert der Frischluftmasse 88 über den HFM 26 gemessen und mit einem Sollwert in einem Steuergerät (nicht dargestellt) verglichen. Die Regelklappe36 ist vollständig geöffnet.

Dabei wird das HD-EGR-Ventil 86 gesteuert. Die Stellgröße des Reglers geht bei kleinen Stellgrößen auf das ND-EGR-Ventil 76 und die Abgasklappe 62 bleibt wirkungsgradoptimal geöffnet. Erst wenn das ND-EGR-Ventil 76 weit geöffnet ist und der Differenzdruck über dieses Ventil 76 zu gering ist, wird die Abgasklappe 62 als Stellgröße des Reglers verwendet, wobei die Abgasklappe 62 dann so angestellt wird, dass der Differenzdruck über das ND-EGR-Ventil 76 wieder ansteigt. In den meisten Betriebpunkten ist letzteres der Fall. Der Übergang ist kontinuierlich.

### 2. Abgasnachbehandlung (Fahrbetrieb mit Regenerationsmaßnahmen):

Als Abgasnachbehandlungsmaßnahmen müssen der DPF 56 sowie der NOₓ-Speicherkatalysator 64 (NSC) regeneriert werden. Die Frischluftmasse 88 wird mit Hilfe der Regelklappe 36 geregelt. Davon unabhängig wird die mittels des zweiten Differenzdrucksensors 78 erfasste Abgasrückführrate geregelt (zweiter Regelkreis).

Auch dabei wird, wie zuvor, zuerst das ND-EGR-Ventil 76 geöffnet und dann bei Bedarf die Abgasklappe 62 weiter geschlossen. Die NSC-Regeneration erfolgt in bekannter Weise durch Anfettung (λ < 1) wobei eine Kombination aus Drosselung über die Abgasklappe 62 und erhöhter ND-AGR-Rate zur Anwendung kommt.

Die Regeneration des DPF 56 erfolgt nicht durch Anfetten sondern durch erhöhte Abgastemperaturen beispielsweise über zusätzliche Einspritzungen.

In beiden Fällen ist ein Wirkungsgradoptimaler Arbeitspunkt sichergestellt, da immer zuerst das ND-AGR-Ventil 76 geöffnet und erst dann die Abgasklappe 62 geschlossen wird. So werden die Drosselverluste minimiert.

Da im Warmlauf die Kühlwirkung des Ladluftkühlers 32 zu groß ist, sodass die HC-Emissionen zu stark ansteigen würden, ist die HD-AGR-Strecke 82 vorgesehen. Dies verbessert auch die Dynamik, vor allem aus dem Fahrzeug-Stillstand. Das Abgasvolumen, das sich innerhalb der gesamten AGR-Strecke (inklusive Ladeluftkühler) befindet, muss beim Anfahren (bzw. bei hoher Momentenanforderung) erst durch Frischluft ersetzt werden. Eine Kühlung des HD-AGR-Massenstromes 84 ist nicht unbedingt notwendig, gleichwohl kann in der HD-AGR-Strecke 82 ein AGR-Kühler optional vorgesehen sein.

Im Zusammenhang mit dem NOₓ-Speicherkatalysator 64 ist die ND-AGR von besonderem Vorteil. Die Möglichkeit, den Katalysator 64 zu regenerieren (sowohl DeNoₓ, als auch DeSoₓ) ist durch die maximal zulässigen Bauteiltemperaturen begrenzt. Die Begrenzung ist vor allem durch die Turbinentemperatur des Abgasturboladers 30 bestimmt. Diese Temperaturen können während der Regeneration mit Hilfe der ND-AGR-Strecke 70 effektiv gesenkt werden, so dass sich der mögliche Arbeitsbereich des Katalysators zu erheblich höheren Lasten gegenüber reinen HD-AGR-Systemen erweitert.

## Patentansprüche

1. Brennkraftmaschine, insbesondere Dieselmotor oder Ottomotor, mit einer Frischluftanlage (18), in der ein Ladeluftkühler (32) (LLK) angeordnet ist, einer Abgasanlage (20), einem Abgasturbolader (30) (ATL), welcher einen in der Frischluftanlage (18) stromauf des LLK (32) angeordneten Verdichter (28) und eine in der Abgasanlage (20) angeordnete Turbine (44) aufweist, einer ersten Leitung (82) für eine Hochdruck-Abgasrückführung (HD-AGR), welche stromauf der Turbine (44) des ATL (30) von der Abgasanlage (20) abzweigt, ein HD-AGR-Ventil (86) aufweist und stromab des LLK (32) in die Frischluftanlage (18) mündet, einer zweiten Leitung (70) für eine Niederdruck-Abgasrückführung (ND-AGR), welche stromab der Turbine (44) des ATL (30) von der Abgasanlage (18) abzweigt, ein ND-AGR-Ventil (76) aufweist und stromauf des Verdichters (28) des ATL (30) in die Frischluftanlage (18) mündet, und einer Abgasklappe (62), welche in der Abgasanlage (20) stromab der Abzweigung der ND-AGR-Leitung (70) angeordnet ist, **dadurch gekennzeichnet, dass** in der ND-AGR-Leitung (70) wenigstens ein Drucksensor derart angeordnet und ausgebildet ist, dass dieser in der ND-AGR-Leitung (70) eine Druckdifferenz zwischen einem Ort stromauf und einem Ort stromab des ND-AGR-Ventils (76) bestimmt, wobei in der ND-AGR-Leitung (70) ein AGR-Kühler (74) angeordnet ist und der Drucksensor einen Absolutdrucksensor umfasst, welcher in Strömungsrichtung vor dem AGR-Kühler (74) angeordnet ist.

2. Brennkraftmaschine nach Anspruch 1, **dadurch gekennzeichnet, dass** in der HD-AGR-Leitung (82) ein AGR-Kühler angeordnet ist.

3. Brennkraftmaschine nach wenigstens einem der vorhergehenden Ansprüche, **dadurch gekennzeichnet, dass** in der Abgasanlage (20) stromab der Turbine (44) des ATL (30) ein Partikelfilter (56) angeordnet ist.

4. Brennkraftmaschine nach Anspruch 3, **dadurch gekennzeichnet, dass** die ND-AGR-Leitung (70) stromab des Partikelfilters (56) von der Abgasanlage (20) abzweigt.

5. Brennkraftmaschine nach Anspruch 1, **dadurch gekennzeichnet, dass** der AGR-Kühler (74) stromauf des ND-AGR-Ventils (76) angeordnet ist.

6. Brennkraftmaschine nach wenigstens einem der vorhergehenden Ansprüche, **dadurch gekennzeichnet, dass** in der ND-AGR-Leitung (70) stromab des ND-AGR-Ventils (76) ein Temperatursensor (80) angeordnet ist.

7. Brennkraftmaschine nach wenigstens einem der vorhergehenden Ansprüche, **dadurch gekennzeichnet, dass** in der Abgasanlage (20) stromauf der Turbine (44) ein Temperatursensor (42) angeordnet ist.

8. Verfahren zum Betreiben einer Brennkraftmaschine nach Anspruch 1, insbesondere Dieselmotor oder Ottomotor, mit einer Frischluftanlage, einer Abgasanlage, einem Abgasturbolader (ATL), welcher einen in der Frischluftanlage angeordneten Verdichter und eine in der Abgasanlage angeordnete Turbine aufweist, wobei rückgeführtes Abgas über eine Leitung für eine Niederdruck-Abgasrückführung (ND-AGR) mit einem ND-AGR-Ventil stromab der Turbine des ATL von der Abgasanlage abgezweigt und stromauf des Verdichters des ATL als ND-AGR-Massenstrom der Frischluftanlage zugeführt wird und wobei rückgeführtes Abgas über eine Leitung für eine Hochdruck-Abgasrückführung (HD-AGR) mit einem HD-AGR-Ventil stromauf der Turbine des Abgasturboladers von der Abgasanlage abgezweigt und stromab des Verdichters des ATL als HD-EGR-Massenstrom in die Frischluftanlage zugeführt wird, wobei in der ND-AGR-Leitung (70) ein AGR-Kühler (74) angeordnet ist und in Strömungsrichtung vor diesem AGR-Kühler (74) ein einen Absolutdrucksensor umfassenden Drucksensor derart angeordnet und ausgebildet ist, dass dieser in der ND-AGR-Leitung (70) eine Druckdifferenz zwischen einem Ort stromauf und einem Ort stromab des ND-AGR-Ventils (76) bestimmt.

9. Verfahren nach Anspruch 8, wobei in der Abgasanlage stromab der Abzweigung der ND-AGR-Leitung eine Abgasklappe angeordnet ist und diese geöffnet wird und der Volumenstrom über die ND-AGR-Leitung solange ausschließlich mittels des ND-AGR-Ventils geregelt wird, solange ein Druckgefälle über das ND-AGR-Ventil einen vorbestimmten Wert überschreitet, wobei bei Unterschreiten des vorbestimmten Wertes zusätzlich die Abgasklappe in Schließrichtung betätigt wird, um den Volumenstrom über die ND-AGR-Leitung zu regeln.

10. Verfahren nach Anspruch 9, **dadurch gekennzeichnet, dass** das rückgeführte Abgas aus der Abgasanlage stromab eines Partikelfilters abgezweigt wird.

11. Verfahren nach Anspruch 10, **dadurch gekennzeichnet, dass** der HD-AGR-Massenstrom stromab eines Ladeluftkühlers der Frischluftanlage zugeführt wird.

12. Verfahren nach Anspruch 11, **dadurch gekennzeichnet, dass** der HD-AGR-Massenstrom vor dem Einleiten in die Frischluftanlage gekühlt wird.

13. Verfahren nach wenigstens einem der Ansprüche 9 bis 12, **dadurch gekennzeichnet, dass** stromab des ND-AGR-Ventil eine Temperatur des ND-AGR-Massenstromes gemessen wird.

14. Verfahren nach wenigstens einem der Ansprüche 9 bis 13, **dadurch gekennzeichnet, dass** aus dem über den Absolutdrucksensor bestimmten Absolutdruck der ND-Abgasmassenstrom berechnet und daraus ein Volumenstrom über einen in der Abgasanlage angeordneten Partikelfilter bestimmt wird.

15. Verfahren nach Anspruch 14, **dadurch gekennzeichnet, dass** aus dem Volumenstrom über den Partikelfilter eine Beladung des Partikelfilters bestimmt wird.

16. Verfahren nach wenigstens einem der Ansprüche 9 bis 15, **dadurch gekennzeichnet, dass** der ND-AGR-Massenstrom vor dem Einleiten in die Frischluftanlage gekühlt wird.

## Claims

1. Internal combustion engine, in particular diesel engine or spark-ignition engine, having a fresh air system (18) in which a charge air cooler (32) (CAC) is arranged, having an exhaust system (20), having an exhaust-gas turbocharger (30) (EGT) which has a compressor (28) arranged in the fresh air system (18) upstream of the CAC (32) and has a turbine (44) arranged in the exhaust system (20), having a first line (82) for a high-pressure exhaust-gas recirculation (HP-EGR) which branches off from the exhaust system (20) upstream of the turbine (44) of the EGT (30), has an HP-EGR valve (86) and opens into the fresh air system (18) downstream of the CAC (32), having a second line (70) for a low-pressure exhaust-gas recirculation (LP-EGR) which branches off from the exhaust system (20) downstream of the turbine (44) of the EGT (30), has an LP-EGR valve (76) and opens into the fresh air system (18) upstream of the compressor (28) of the EGT (30), and having an exhaust-gas flap (62) which is arranged in the exhaust system (20) downstream of the branch of the LP-EGR line (70), **characterized in that**, in the LP-EGR line (70), at least one pressure sensor is arranged and designed so as to determine in the LP-EGR line (70) a pressure difference between a location upstream and a location downstream of the LP-EGR valve (76), wherein an EGR cooler (74) is arranged in the LP-EGR line (70) and the pressure sensor comprises an absolute pressure sensor arranged upstream of the EGR cooler (74) in the flow direction.

2. Internal combustion engine according to Claim 1, **characterized in that** an EGR cooler is arranged in the HP-EGR line (82).

3. Internal combustion engine according to at least one of the preceding claims, **characterized in that** a particle filter (56) is arranged in the exhaust system (20) downstream of the turbine (44) of the EGT (30).

4. Internal combustion engine according to Claim 3, **characterized in that** the LP-EGR line (70) branches off from the exhaust system (20) downstream of the particle filter (56).

5. Internal combustion engine according to Claim 1, **characterized in that** the EGR cooler (74) is arranged upstream of the LP-EGR valve (76).

6. Internal combustion engine according to at least one of the preceding claims, **characterized in that** a temperature sensor (80) is arranged in the LP-EGR line (70) downstream of the LP-EGR valve (76).

7. Internal combustion engine according to at least one of the preceding claims, **characterized in that** a temperature sensor (42) is arranged in the exhaust system (20) upstream of the turbine (44).

8. Method for operating an internal combustion engine according to Claim 1, in particular a diesel engine or spark-ignition engine, having a fresh air system, having an exhaust system, having an exhaust-gas turbocharger (EGT) which has a compressor arranged in the fresh air system and has a turbine arranged in the exhaust system, wherein recirculated exhaust gas is branched off from the exhaust system downstream of the turbine of the EGT via a line for a low-pressure exhaust-gas recirculation (LP-EGR) with an LP-EGR valve and, as an LP-EGR mass flow, is supplied to the fresh air system upstream of the compressor of the EGT, and wherein recirculated exhaust gas is branched off from the exhaust system upstream of the turbine of the exhaust-gas turbocharger via a line for a high-pressure exhaust-gas recirculation (HP-EGR) with an HP-EGR valve and, as an HP-EGR mass flow, is supplied into the fresh air system downstream of the compressor of the EGT, wherein an EGR cooler (74) is arranged in the LP-EGR line (70) and, upstream of said EGR cooler (74) in the flow direction, a pressure sensor which comprises an absolute pressure sensor is arranged and designed so as to determine in the LP-EGR line (70) a pressure difference between a location upstream and a location downstream of the LP-EGR valve (76).

9. Method according to Claim 8, wherein an exhaust-gas flap is arranged in the exhaust system downstream of the branch of the LP-EGR line and said exhaust-gas flap is opened, and the volume flow through the LP-EGR line is regulated exclusively by means of the LP-EGR valve, for as long as a pressure gradient across the LP-EGR valve exceeds a predetermined value, wherein if the predetermined value is undershot, the exhaust-gas flap is additionally actuated in the closing direction in order to regulate the volume flow through the LP-EGR line.

10. Method according to Claim 9, **characterized in that** the recirculated exhaust gas is branched off from the exhaust system downstream of a particle filter.

11. Method according to Claim 10, **characterized in that** the HP-EGR mass flow is supplied to the fresh air system downstream of a charge air cooler.

12. Method according to Claim 11, **characterized in that** the HP-EGR mass flow is cooled before being introduced into the fresh air system.

13. Method according to at least one of Claims 9 to 12, **characterized in that** a temperature of the LP-EGR mass flow is measured downstream of the LP-EGR valve.

14. Method according to at least one of Claims 9 to 13, **characterized in that** the LP exhaust-gas mass flow is calculated using the absolute pressure determined by means of the absolute pressure sensor, and from said LP exhaust-gas mass flow a volume flow through a particle filter arranged in the exhaust system is determined.

15. Method according to Claim 14, **characterized in that** a loading of the particle filter is determined from the volume flow through the particle filter.

16. Method according to at least one of Claims 9 to 15, **characterized in that** the LP-EGR mass flow is cooled before being introduced into the fresh air system.

## Revendications

1. Moteur à combustion interne, en particulier moteur diesel ou moteur Otto, comprenant une installation d'air frais (18), dans laquelle est disposé un refroidisseur d'air de charge (32) (LLK), une installation de gaz d'échappement (20), un turbocompresseur à gaz d'échappement (30) (ATL), qui présente un compresseur (28) disposé dans l'installation d'air frais (18) en amont du LLK (32), et une turbine (44) disposée dans l'installation de gaz d'échappement (20), une première conduite (82) pour un recyclage des gaz d'échappement à haute pression (HD-AGR), qui part de l'installation de gaz d'échappement (20) en amont de la turbine (44) de l'ATL (30), qui présente une soupape de HD-AGR (86), et qui débouche en aval du LLK (32) dans l'installation d'air frais (18), une deuxième conduite (70) pour un recyclage des gaz d'échappement à basse pression (ND-AGR), qui part de l'installation de gaz d'échappement (20) en aval de la turbine (44) de l'ATL (30), qui présente une soupape de ND-AGR (76) et qui débouche en amont du compresseur (28) de l'ATL (30) dans l'installation d'air frais (18), et un clapet de gaz d'échappement (62), qui est disposé dans l'installation de gaz d'échappement (20) en aval du branchement de la conduite de ND-AGR (70), **caractérisé en ce que** dans la conduite de ND-AGR (70) est disposé et réalisé au moins un capteur de pression, de telle sorte que celui-ci détermine dans la conduite de ND-AGR (70) une différence de pression entre un endroit en amont et un endroit en aval de la soupape de ND-AGR (76), un refroidisseur d'AGR (74) étant disposé dans la conduite de ND-AGR (70) et le capteur de pression comprenant un capteur de pression absolue, qui est disposé dans le sens de l'écoulement avant le refroidisseur d'AGR (74).

2. Moteur à combustion interne selon la revendication 1, **caractérisé en ce qu'**un refroidisseur d'AGR est disposé dans la conduite de HD-AGR (82).

3. Moteur à combustion interne selon l'une quelconque des revendications précédentes, **caractérisé en ce qu'**un filtre à particules (56) est disposé dans l'installation de gaz d'échappement (20) en aval de la turbine (44) de l'ATL (30).

4. Moteur à combustion interne selon la revendication 3, **caractérisé en ce que** la conduite de ND-AGR (70) part de l'installation de gaz d'échappement (20) en aval du filtre à particules (56).

5. Moteur à combustion interne selon la revendication 1, **caractérisé en ce que** le refroidisseur d'AGR (74) est disposé en amont de la soupape de ND-AGR (76).

6. Moteur à combustion interne selon au moins l'une quelconque des revendications précédentes, **caractérisé en ce qu'**un capteur de température (80) est disposé dans la conduite de ND-AGR (70) en aval de la soupape de ND-AGR (76).

7. Moteur à combustion interne selon au moins l'une quelconque des revendications précédentes, **caractérisé en ce qu'**un capteur de température (42) est disposé dans l'installation de gaz d'échappement (20) en amont de la turbine (44).

8. Procédé pour faire fonctionner un moteur à combustion interne selon la revendication 1, en particulier un moteur diesel ou un moteur Otto, comprenant une installation d'air frais, une installation de gaz d'échappement, un turbocompresseur à gaz d'échappement (ATL), qui présente un compresseur disposé dans l'installation d'air frais et une turbine disposée dans l'installation de gaz d'échappement, le gaz d'échappement recyclé partant de l'installation de gaz d'échappement par le biais d'une conduite pour un recyclage des gaz d'échappement à basse pression (ND-AGR) avec une soupape de ND-AGR en aval de la turbine de l'ATL et étant acheminé en amont du compresseur de l'ATL sous forme de flux massique de ND-AGR à l'installation d'air frais, et le gaz d'échappement recyclé partant de l'installation de gaz d'échappement par le biais d'une conduite pour un recyclage des gaz d'échappement à haute pression (HD-AGR) avec une soupape de HD-AGR en amont de la turbine du turbocompresseur à gaz d'échappement, et étant acheminé en aval du compresseur de l'ATL sous forme de flux massique de HD-AGR dans l'installation d'air frais, un refroidisseur d'AGR (74) étant disposé dans la conduite de ND-AGR (70) et un capteur de pression comprenant un capteur de pression absolue étant disposé et réalisé dans la direction de l'écoulement avant ce refroidisseur d'AGR (74), de telle sorte que celui-ci détermine une différence de pression dans la conduite de ND-AGR (70) entre un endroit en amont et un endroit en aval de la soupape de ND-AGR (76).

9. Procédé selon la revendication 8, dans lequel, dans l'installation de gaz d'échappement en aval du branchement de la conduite de ND-AGR est disposé un clapet de gaz d'échappement et celui-ci est ouvert et le débit volumique à travers la conduite de ND-AGR est régulé exclusivement au moyen de la soupape de ND-AGR tant qu'un gradient de pression à travers la soupape de ND-AGR dépasse une valeur prédéterminée, le clapet de gaz d'échappement étant en outre actionné dans la direction de fermeture au cas où la valeur prédéterminée n'est pas atteinte, afin de réguler le débit volumique à travers la conduite de ND-AGR.

10. Procédé selon la revendication 9, **caractérisé en ce que** le gaz d'échappement recyclé est prélevé de l'installation de gaz d'échappement en aval d'un filtre à particules.

11. Procédé selon la revendication 10, **caractérisé en ce que** le flux massique de HD-AGR est acheminé en aval d'un refroidisseur d'air de charge de l'installation d'air frais.

12. Procédé selon la revendication 11, **caractérisé en ce que** le flux massique de HD-AGR est refroidi avant son introduction dans l'installation d'air frais.

13. Procédé selon au moins l'une quelconque des revendications 9 à 12, **caractérisé en ce qu'**une température du flux massique de ND-AGR est mesurée en aval de la soupape de ND-AGR.

14. Procédé selon au moins l'une quelconque des revendications 9 à 13, **caractérisé en ce que** le flux massique de gaz d'échappement ND est calculé à partir de la pression absolue déterminée par le biais du capteur de pression absolue, et on détermine à partir de celui-ci un débit volumique à travers un filtre à particules disposé dans l'installation de gaz d'échappement.

15. Procédé selon la revendication 14, **caractérisé en ce que** l'on détermine, à partir du débit volumique à travers le filtre à particules, un chargement du filtre à particules.

16. Procédé selon au moins l'une quelconque des revendications 9 à 15, **caractérisé en ce que** le flux massique de ND-AGR est refroidi avant son introduction dans l'installation d'air frais.
